Europäisches Patentamt

European Patent Office

Office européen des brevets

(19)

(11) Numéro de publication: **0 050 541**
A1

(12) # DEMANDE DE BREVET EUROPEEN

(21) Numéro de dépôt: 81401509.5

(22) Date de dépôt: 30.09.81

(51) Int. Cl.³: **A 47 J 27/00,** A 47 J 31/54

(30) Priorité: 16.10.80 FR 8022118

(43) Date de publication de la demande: 28.04.82
Bulletin 82/17

(84) Etats contractants désignés: CH DE IT LI

(71) Demandeur: Etablissements GROUARD Frères Societe
Anonyme, 6 Rue Morand, F-75011 Paris (FR)

(72) Inventeur: Grouard, Roger, 6 Rue Morand, F-75011 Paris
(FR)

(54) **Chauffe-lait électrique automatique.**

(57) L'invention concerne un chauffe lait à chauffage électrique direct modulé, avec niveau extérieur visible.

Il comporte un pot 2 avec éléments électriques 5, 6, 7 et
9, des plaques de diffusion 4 et 12, un agitateur 8 actionné
par un moteur 11 et un couvercle 17 avec tige 1 à flotteur 14
et bouton 18.

Un thermostat 19 assure la régulation automatique de
la température.

Parmi les applications = chauffage de lait ou du chocolat dans les Cafés, Hotels, Collectivités, Navires.

EP 0 050 541 A1

ACTORUM AG

La présente invention concerne des appareils assurant sans surveillance le chauffage du lait ou de tous liquides contenant des matières grasses à partir de liquides froids ou déjà chauffés placés dans l'appareil.

On connait déjà :

- des chauffe-lait chauffant les liquides au bain-marie, avec les difficultés de régulation automatique, de temps de chauffe assez longs, de consommation importante d'énergie puisqu'il faut chauffer l'eau (ou le liquide intermédiaire) en plus du liquide désiré et de surveillance du niveau de l'eau qui s'évapore.

- des chauffe-lait à chauffage électrique direct mais qui comportent des pots recevant un traitement spécial anti-adhésif fragile qui est détruit en cas de mauvaise utilisation.

- des chauffe-lait à chauffage direct dont le pot métallique présente des points chauds qui font bruler le lait ce qui entraine un changement du gout et de la couleur du lait ainsi que des difficultés de nettoyage après le service.

- ancun des appareils cités ci-dessus ne bénéficie d'un niveau extérieur en raison de l'impossibilité de nettoyer, sans démontage les dispositifs classiques à tube verre.

Le chauffe-lait (pour le lait et tout liquide contenant des matières grasses) suivant l'invention permet d'éviter ces inconvénients.

Il comporte en effet :

- un pot frabriqué dans une matière résistant à la chaleur et au liquide à chauffer, par exemple en acier inoxydable chrome-nickel poli, facile à nettoyer après le service.

- à l'extérieur du pot, une plaque de cuivre ou d'aluminium, mise en forme, interposée entre le pot et les éléments de chauffage électrique qui évite les points chauds nuisibles à la bonne tenue du lait ou des liquides contenant des matières grasses.

- un agitateur, placé au fond du pot, mû par un moteur électrique qui renouvelle continuellement le lait en contact avec la paroi du pot transmettant les calories de chauffage, évitant ainsi la surchauffe locale du liquide et les inconvénients qui en résultent pour le goût et la couleur. Cet agitateur peut être :

- dans un première variante à transmission mécanique avec bague d'étanchéité sur l'arbre de transmission.

- dans une deuxième variante, à commande magnétique avec aimant extérieur tournant commandé par le moteur et aimant intérieur entrainé par le premier.

Cette deuxième variante facilite grandement le nettoyage et évite les risques de fuite de liquide à l'extérieur.

- un couvercle comportant un flotteur inférieur monté sur une tige coulissant à travers le couvercle, terminée par un bouton de manipulation.

Lorsque le pot est plein la tige est complétement sortie et le bouton au point haut.

Lorsque le pot est presque vide la tige est complétement rentrée et le bouton en contact du couvercle.

Dans les positions intermédiaires, des repéres placés sur la tige permettent de connaître la quantité contenue dans le pot sans être obligé de retirer le couvercle.

A noter que le flotteur peut, si on le désire, servir également d'agitateur manuel par action sur le bouton supérieur.

- dans le but d'économiser l'énergie et de faciliter la régulation automaque commandée par un thermostat placé à l'intérieur ou à l'extérieur du pot, le chauffage est réparti en tre plusieurs éléments électriques que l'on enclanche suivant la quantité de liquide froid contenu dans le pot, aprés contrôle visuel desrepères placés sur la tige. Il comporte :

- un petit élément électrique de conservation placé au fond à l'extérieur qui assure le chauffage de conservation après le chauffage rapide, suivant les ordres du themostat.

- un, deux ou trois éléments électriques de chauffage placés en ceinture au bas du pot qui assurent le chauffage rapide du liquide froid jusqu' à coupure par le thermostat.

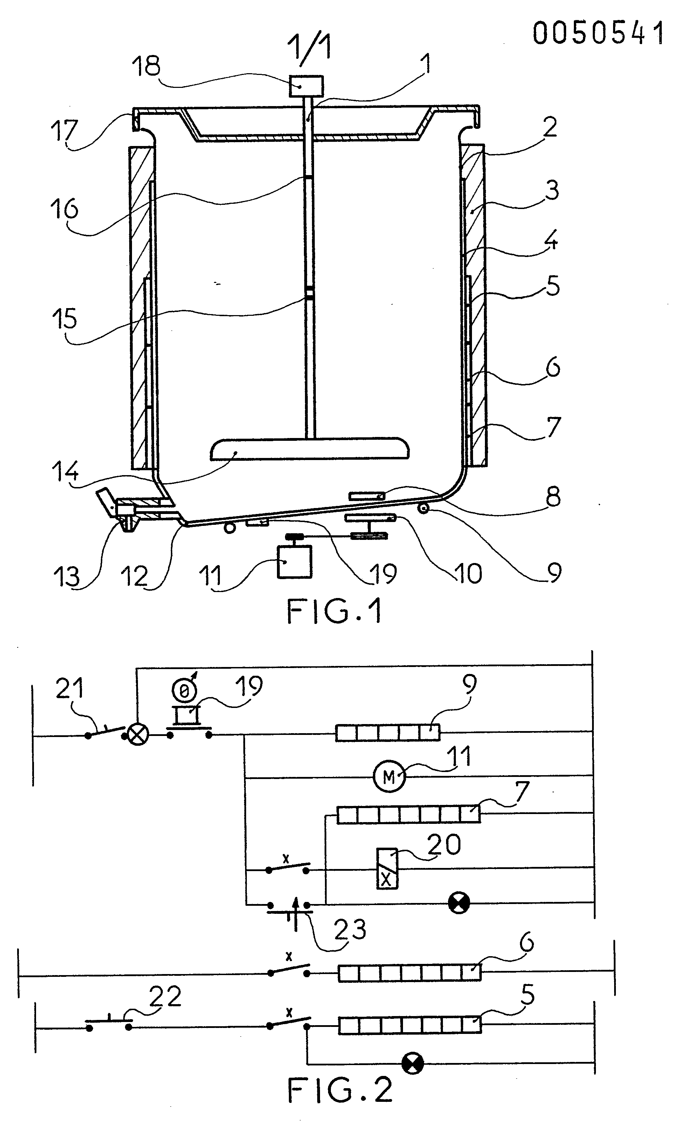

Sur le dessin annexé, la figure 1 est une vue en coupe de l'appareil avec agitateur à commande magnétique.

Le schéma électrique de la figure 2 est un montage possible, non limitatatif, des appareillages électriques pour obtenir les différentes vitesses de chauffage.

Tel que représenté, l'appareil comporte un pot 2 recevant le liquide, une plaque ceinture de diffusion de la chaleur 4, une plaque de diffusion au fond 12, les éléments électriques 5,6,7 et 9, le dispositif d'agitation électrique (ici magnétique) 10, le moteur d'entrainement 11, le robinet de tirage 13.

Le couvercle supérieur 17, recoit la tige coulissante 1 munie du flotteur 14 et du bouton 18. Deux repéres de quantité sont représentés en 15 et 16 toute autre disposition est possible.

Le calofifuge 3 réduit les déperditions de chaleur et le thermostat (ici extérieur) 19 assure la régulation du chauffage.

Le schéma électrique annexé figure 2 comporte : les éléments électriques (ici quatre) 5,6,7 et 9, le thermostat 19, le moteur électrique 11, le relais 20, les interrupteurs ouvert-fermé 21 et 22, l'interrupteur à impulsion 23, enfin la filerie de liaison.

Le fonctionnement est le suivant :

On place le liquide froid dans lepot 2 et on lit la quantité sur les repéres 15 eu 16 de la tige 1. Suivant celui qui est visible, on positionne l'interrupteur 22 Sur la quantité correspondant.

L'appareil est mis en route par action sur l'interrupteur 21 et le chauffage rapide par l'interrupteur à impulsion 23.

Dès mise en route, le moteur 11 tourne et l'agitateur 8 également.

Lorsque la température prédeterminée est attente, le thermostat 19 arret tout le chauffage ainsi que l'agitateur.

Après plusieurs minutes, la température a baissé légérement et le thermostat 19 enclanche seulement le chauffage de conservation 9, sans aucune intervention humaine.

Le tirage du liquide chaud se fait par le robinet 13.

Cet appareil peut être utilisé à chaque fois qu'il est nécessaire de servir du lait chaud ou des liquides contenant des matières grasses telles que le chocolat par exemple.

Ces besoins se rencontrent quotidiennement dans les cafés, Brasseries, Salons de thé, Restaurants, Hotels, Navires de mer, Collectivités (garderies d'enfants, hopitaux, lycées, collèges...) et dans les Etablissements assurant un service similaire.

0050541

## REVENDICATIONS

1. Chauffe-lait comportant un pot inaltérable chauffé électriquement avec commande thermostatique caractérisé par le fait qu'il comporte :
   - à l'extérieur du pot, une plaque de cuivre ou d'aluminium, mise en forme, interposée entre le pot et les éléments de chauffage électrique qui évite les points chauds nuisibles à la bonne tenue du lait ou des liquides contenant des matières grasses.
   - un agitateur, placé au fond du pot, mû par un moteur électrique qui renouvelle continuellement le lait en contact avec la paroi du pot transmettant les calories de chauffage, évitant ainsi la surchauffe locale du liquide.
2. Chauffe-lait selon la revendication 1, caractérisé en ce que le chauffage direct s'effectue à travers une plaque de diffusion.
3. Chauffe-lait selon la revendication 1, caractérisé par le dispositif inférieur d'agitation, à commande électrique et transmission magnétique.
4. Chauffe-lait selon la revendication 1, caractérisé par son dispositif de lecture extérieure du niveau de liquide permettant la modulation de la puissance de chauffe.

0050541

FIG.1

FIG.2

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | US - A - 3 200 999 (PRICE Jr.)<br><br>  * en entier *<br><br>-- | 1,2,3 | A 47 J 27/00<br>        31/54 |
| | US - A - 4 039 777 (BAKER)<br><br>  * colonne 4, lignes 12 à 68;<br>  colonne 5, lignes 1 à 7;<br>  figures 2 à 4 *<br><br>-- | 1,2 | |
| | DE - C - 834 278 (KOPIAK)<br><br>  * en entier *<br><br>-- | 1,2 | **DOMAINES TECHNIQUES RECHERCHES (Int. Cl. ³)**<br><br>A 47 J |
| | US - A - 4 215 267 (KAEBITZSCH)<br><br>  * colonne 3; figure 3 *<br><br>-- | 1,2 | |
| | GB - A - 2 003 723 (KOPPELMANS)<br><br>  * en entier *<br><br><br><br>--------------- | 4 | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 18-01-1982 | SCHARTZ |

OEB Form 1503.1   06.78